# EUROPÄISCHE PATENTSCHRIFT

(11) **EP 4 055 281 B1**
(45) Veröffentlichungstag und Bekanntmachung des Hinweises auf die Patenterteilung: **08.01.2025**
(21) Anmeldenummer: 20824438.4
(22) Anmeldetag: 06.11.2020
(51) Int. Cl.: F15B 15/14, B23K 26/282, B23K 33/00

(54) **ARBEITSZYLINDER**
WORKING CYLINDER
CYLINDRE DE TRAVAIL

(30) Priorität: 08.11.2019 DE 202019004568 U
(43) Veröffentlichungstag der Anmeldung: 14.09.2022
(73) Patentinhaber: Bümach Engineering International B.V., 7826 TA Emmen (NL)
(72) Erfinder: BUETER, Josef, 49733 Haren/Altenberge (DE)
(74) Vertreter: Weihrauch, Frank
(86) Internationale Anmeldenummer: PCT/DE2020/000270
(87) Internationale Veröffentlichungsnummer: WO 2021/089072

(56) Entgegenhaltungen:
- DE-A1- 102007 004 666
- DE-A1- 2 511 126
- DE-A1- 4 041 992
- DE-C2- 2 511 126
- DE-U1- 202012 008 320
- DE-U1- 202012 008 320

## Beschreibung

Die Erfindung betrifft einen geschweißten Arbeitszylinder mit einer erhöhten Belastbarkeit.

In dem Stand der Technik sind hydraulische und pneumatische Arbeitszylinder in verschiedenen Varianten beschrieben.

In fast allen Ausbildungen weisen diese Arbeitszylinder ein Zylinderrohr sowie Verschlussteile auf.

Zur Herstellung solcher Arbeitszylinder erfolgt gemäß dem Stand der Technik eine Kopplung der Verschlussteile mit dem Zylinderrohr in unterschiedlicher Weise.

Verbreitet erfolgt eine formschlüssge Kopplung durch Verschrauben der Verschlussteile mit dem Zylinderrohr. Die so hergestellten Arbeitszylinder sid daher auch als Schraubzylinder bekannt.

Aus dem Stand der Technik ist es auch bekannt, zunächst das Bodenverschlussteil mit dem Zylinderrohr durch MAG-Schweißen zu verbinden und dann ausschließich das Führungsverschlussteil zu verschrauben.

Schraubzylinder wie auch Zylinder mit Verschraubung nur eines Verschlussteils und MAG-Verschweißung des anderen Verschlussteils werden nach dem Stand der Technik in hoher Qualität bereitgestellt und haben sich als hochwertige und zuverlässige Produkte bewährt.

Da das Gewinde der Verschlussteile und des Zylinderrohrs in der Regel durch ein spanendes Verfahren ausgebildet wird ist damit verbunden, dass insbesondere für das Zylinderrohr eine Zulage der Materialstärke, also der Rohrwandstärke, für das subtraktiv einzubringende Gewinde vorgesehen werden muss, weil das Gewinde das Zylinderrohr unvermeidlich schwächt. Somit liegt dann aber eine Rohrwandstärke vor, die für die Aufnahme der Kräfte im Arbeitsbetrieb, insbesondere der Kräfte durch den Betriebsdruck des Fluids, erheblich überdimensioniert ist. Nachteilig führt diese zu einem erhöhten Materialverbrauch.

Zudem erfordern die spanenden Verfahren zur Ausbildung des Gewindes eine hohe Präzision und sind somit sehr anspruchsvoll in der Fertigung. Zur Sicherung der Dichtheit muss regelmäßig zwischen dem Zylinderrohr und dem jeweiligen Verschlussteil als zusätzliche Maßnahme eine Dichtung eingebracht werden.

Ein Nachteil ist es zudem, dass zusätzliche Mittel gegen ein Lösen der Schraubverbindung vorgesehen werden müssen. Ebenso ist es nachteilig, dass infolge der wechselnden Betriebsdrücke dynamische Belastungen an den Gewinden vorliegen, welche deren Lebensdauer begrenzen. Aus DE 10 2007 004666 A1, DE 20 2012 008320 U1, DE 40 41 992 A1 ist bekannt, Verschlussteile mit dem Zylinderrohr mittels eines Laserverfahrens zu verschweißen.

Die Aufgabe der Erfindung ist es, einen Arbeitszylinder aufzuzeigen, welcher eine besonders hohe Qualität aufweist, sowie Material sparend, einfach und somit kostengünstig herstellbar ist.

Die Aufgabe wird durch die im Patentanspruch 1 aufgeführten Merkmale gelöst. Bevorzugte Weiterbildungen ergeben sich aus den Unteransprüchen.

Der Arbeitszylinder weist erfindungsgemäß als Grundkomponenten ein Zylinderrohr, ein erstes und ein zweites Verschlussteil und eine Kolbeneinheit auf. Das erste Verschlussteil und das zweite Verschlussteil werden nachfolgend zusammengefasst auch als die Verschlussteile bezeichnet.

Der erfindungsgemäße Arbeitszylinder kann in unterschiedlichen Ausbildungen vorliegen. Insbesondere kann es sich bei dem Arbeitszylinder um einen Differenzialarbeitszylinder, einen Plungerzylinder, einen Gleichgangzylinder, einen Teleskopzylinder, einen Zugzylinder oder auch um einen pneumatischen Arbeitszylinder handeln. Soweit der Arbeitszylinder als Gleichgangzylinder ausgebildet ist, wird er nachfolgend auch als Lenkzylinder bezeichnet. Als Arbeitszylinder im Sinne der vorliegenden Erfindung werden insbesondere ferner Speicherzylinder, Gasfederzylinder und hydraulische Stoßdämpfer verstanden.

Dabei kann ein erfindungsgemäßer Arbeitszylinder insbesondere doppelt wirkend oder einfach wirkend ausgebildet sind. Bei einem Differenzialarbeitszylinder beispielsweise handelt es sich um einen doppelt wirkenden hydraulischen Arbeitszylinder mit zwei Arbeitsräumen, wobei in den beiden Arbeitsräumen unterschiedlich große Angriffsflächen des Kolbens vorliegen. Bei gleichem Betriebsdruck wirken somit in den beiden Betätigungsrichtungen auf den Kolben unterschiedlich große Kräfte. Bei einem Gleichgangzylinder wird im Unterschied zu einem Differenzialarbeitszylinder die Kolbenstange durch beidseitig angeordnete Führungsverschlussteile geführt, so dass gleich große Angriffsflächen des Kolbens vorliegen und somit bei gleichem Betriebsdruck in beiden Betätigungsrichtungen gleich große Kräfte wirken, so dass Gleichgangzylinder insbesondere als Lenkzylinder eingesetzt werden. Bei einem Plungerzylinder handelt es sich dagegen um einen einfach wirkenden Arbeitszylinder, bei dem das Druckmedium den Kolben als einen Volumenkörper verdrängt und somit dessen Ausfahrtbewegung bewirkt. Entsprechendes gilt auch für den Telekopzylinder, wobei hier mehrere Zylinderrohre ineinandergeschoben vorliegen und so besonders lange Arbeitsbewegungen ermöglichen.

Das Zylinderrohr weist erfindungsgemäß ein erstes Zylinderrohrende und ein zweites Zylinderrohrende auf. An dem ersten Zylinderrohrende ist nach erfolgter Montage das erste Verschlussteil und an dem zweiten Zylinderrohrende das zweite Verschlussteil angeordnet. Dabei sind beide Zylinderrohrenden vorzugsweise gleich gefertigt. Vorzugsweise weisen die beiden Zylinderrohrenden angeschrägte axiale Stirnflächen auf, wobei die Anschrägungen den selben Winkel aufweisen. Die axialen Stirnflächen weisen somit vorzugsweise eine gleiche Querschnittsfläche auf. Es ist aber auch möglich, die Zylinderrohrenden unterschiedlich auszubilden.

Erfindungsgemäß ist das erste Verschlussteil an dem ersten Zylinderrohrende angeordnet. Bevorzugt handelt es sich bei dem ersten Verschlussteil um ein Führungsverschlussteil. Als Führungsverschlussteil wird dabei ein Verschlussteil verstanden, welches eine Kolbeneinheit gleitend und dichtend aufnimmt. Dabei kann die Kolbeneinheit beispielsweise bei einem Differenzialarbeitszylinder aus einem Kolben und einer Kolbenstange bestehen, wobei dann die Kolbenstange von dem Führungsverschlussteil aufgenommen wird. Bei einem Plungerzylinder liegt die Kolbeneinheit als ein volumenbildender Kolben vor, auch als Tauchkolben bezeichnet, der von dem Führungsverschlussteil aufgenommen wird. Das erste Verschlussteil ist so ausgebildet, dass es eine Kontaktfläche besitzt, welche beim Ansetzen an das erste Zylinderrohrende an einer korrespondierenden weiteren Kontaktfläche des ersten Zylinderrohrendes anliegt. Diese Kontaktflächen umlaufen bevorzugt das erste Verschlussteil sowie das Zylinderrohr vollständig. Somit ergibt sich eine durchgehende Ringfläche, an welcher das erste Verschlussteil am ersten Zylinderrohrende anliegt. Die Ringfläche ist schräg geneigt, so dass sie im geometrischen Sinne als Kegelstumpfmantelfläche vorliegt. Nachfolgend wird diese Fläche zur Vereinfachung unabhängig von der geometrischen Ausbildung vereinfacht lediglich als Ringfläche bezeichnet.

Das zweite Verschlussteil ist erfindungsgemäß am zweiten Zylinderrohrende angeordnet. Die Beschreibungsinhalte zu dem ersten Verschlussteil in dessen Beziehung zu dem ersten Zylinderrohrende gelten in entsprechender Weise für das zweite Verschlussteil in dessen Beziehung zu dem zweiten Zylinderrohrende. Das zweite Verschlussteil ist hinsichtlich der Kontaktfläche analog zum ersten Verschlussteil ausgebildet. Bevorzugt handelt es sich bei dem zweiten Verschlussteil um ein Bodenverschlussteil, welches dann axial dem Kolben der Kolbeneinheit gegenüberliegt sowie den mindestens einen Arbeitsraum des erfindungsgemäßen Arbeitszylinders axial begrenzt.

Der erfindungsgemäße Arbeitszylinder weist ferner die Kolbeneinheit auf. Je nach Arbeitszylinderart kann die Kolbeneinheit aus einem Kolben und einer Kolbenstange gebildet sein - wie dies beispielsweise bei einem Differenzialarbeitszylinder oder einem Gleichgangzylinder der Fall ist - oder allein durch einen Kolben gebildet sein - wie dies beispielsweise bei einem Plungerzylinder der Fall ist - oder andere Ausbildungen aufweisen.Soweit die Kolbeneinheit einen Kolben und eine Kolbenstange aufweist, stehen der Kolben und die Kolbenstange relativ zu einander in einer festen Lagebeziehung. Vorzugsweise sind der Kolben und die Kolbenstange fest miteinander gekoppelt. Die Verbindung ist dabei vorzugsweise stoffschlüssig als Schweißverbindung ausgebildet. Kolben und Kolbenstange können auch lösbar gekoppelt sein. In besonderen Fällen ist es aber auch möglich, dass die Kolbeneinheit einstückig ausgebildet ist und somit Kolben und Kolbenstange Abschnitte eines monolithischen Bauteils sind.

Erfindungsgemäß bilden das Zylinderrohr und die Verschlussteile im montierten Zustand einen Zylinderinnenraum aus. Sind Zylinderrohr und Verschlussteile zusammengefügt, begrenzen deren innenliegenden Oberflächenabschnitte den Zylinderinnenraum. Der Zylinderinnenraum führt dabei bis zu der jeweiligen Laserringschweißnaht.

Weiterhin bildet in dem erfindungsgemäßen Arbeitszylinder die Kolbeneinheit in dem Zylinderinnenraum mindestens einen Arbeitsraum aus. Dieser wird durch das Zylinderrohr, ein Verschlussteil und die Kolbeneinheit umgrenzt. Die Kolbeneinheit ist axial verschieblich angeordnet, wobei die Hauptlängsachse des Zylinderrohrs und die axialen Bewegungsrichtung der Kolbeneinheit übereinstimmen. Hierbei durchsetzt die Kolbeneinheit gleitend und dichtend zumindest abschnittsweise vorzugsweise das erste Verschlussteil. Dem Arbeitsraum ist ein Druckmediumanschluss zugeordnet, über den das Druckmedium in den Arbeitsraum gelangen kann oder aus diesem herausgeleitet werden kann und der Arbeitsraum somit mit einem Druck beaufschlagbar ist. Das Druckmedium kann als hydraulisches oder pneumatisches Druckmedium vorliegen.

Liegt der erfindungsgemäße Arbeitszylinder beispielsweise in der Bauform eines Differenzialarbeitszylinders vor, gilt zudem Folgendes.

Der Kolben der Kolbeneinheit ist in dem Zylinderinnenraum angeordnet und trennt den Zylinderinnenraum in einen Kolbenbodenarbeitsraum, nachfolgend auch verkürzt als Kolbenbodenraum bezeichnet, und einen Kolbenstangenarbeitsraum. Dabei befindet sich der Kolbenbodenraum zwischen dem Kolben und dem zweiten Verschlussteil, hier ausgebildet als Bodenverschlussteil. Der Kolbenstangenarbeitsraum befindet sich auf der Seite der Kolbenstange zwischen dem Kolben und dem ersten Verschlussteil, hier ausgebildet als Führungsverschlussteil. Der mindestens eine Arbeitsraum liegt somit als der Kolbenstangenarbeitsraum vor. Zudem bildet der Kolbenbodenarbeitsraum einen weiteren Arbeitsraum.

Der Kolben ist axial verschieblich und so im Zylinderinnenraum angeordnet, dass sich die Hauptlängsachsen von Kolben und Zylinderrohr überlagern. Die Druckmediumanschlüsse sind so am Zylinder angeordnet, dass der Kolbenbodenarbeitsraum und der Kolbenstangenarbeitsraum mit einem Betriebsdruck beaufschlagt werden können.

Der Kolben kann zusätzlich verschiedene Führungs-, Dichtungs- bzw. Kolbenringe aufweisen. Verschiedene Ausführungen eines Kolbens für einen Arbeitszylinder sind als solche aus dem Stand der Technik bekannt.

Die Kolbenstange durchsetzt erfindungsgemäß gleitend das erste Verschlussteil, hier ausgebildet als Führungsverschlussteil.

Die Kolbenstange ist gleitend im Führungsverschlussteil gelagert, wobei das Führungsverschlussteil ausgebildet ist, ein Austreten des Druckmediums, nachfolgend auch als Fluid bezeichnet, zu verhindern. Dies erfolgt zum Beispiel über entsprechende Ringdichtungen.

Der erfindungsgemäße Arbeitszylinder ist insbesondere dadurch gekennzeichnet, dass beide Verschlussteile, beispielsweise im Falle eines Differenzialarbeitszylinders also sowohl das Führungsverschlussteil als auch das Bodenverschlussteil, mit dem Zylinderrohr verschweißt sind.

Dabei ist das erste Verschlussteil mit dem Zylinderrohr mittels einer ersten umlaufenden Laserringschweißnaht und das zweite Verschlussteil mit dem Zylinderrohr mittels einer zweiten umlaufenden Laserringschweißnaht stoffschlüssig verbunden. Die jeweils miteinander verbundenen Komponenten werden nachfolgend auch zusammengefasst als die Kopplungspartner bezeichnet. Die beiden Verschlussteile werden im Laserschweißverfahren mit dem Zylinderrohr verbunden. Es handelt sich bei den Laserringschweißnähten um Schmelzschweißverbindungen, ohne dass Schweißzusatzwerkstoffe zugegeben werden.

Durch das Laserschweißen wird vorteilhaft eine sehr schmale, spitz zulaufende Schweißnaht ausgebildet. Der von den seitlichen Flanken der im Wesentlichen V-förmigen Laserschweißnaht aufgespannte spitze Winkel beträgt bevorzugt weniger als 15 Grad und besonders bevorzugt weniger als 10 Grad.

Die beiden Laserringschweißnähte bilden jeweils eine fluiddichte Dichtebene aus. Dies bedeutet, dass die erste Laserringschweißnaht einen Druckmediumdurchtritt an der Verbindungstelle zwischen dem Zylinderrohr und dem ersten Verschlussteil und die zweite Ringschweißnaht einen Druckmediumdurchtritt zwischen dem Zylinderrohr und dem zweiten Verschlussteil verhindert, ohne dass es zusätzlicher Mittel zur Dichtung, wie beispielsweise eines Dichtungsrings, bedarf.

Zylinderrohr und Verschlussteile sowie bevorzugt auch die Kolbeneinheit bestehen jeweils aus einer Metalllegierung und besonders bevorzugt aus einer Stahllegierung. Hierbei kann sich die Materialzusammensetzung der einzelnen Komponenten leicht unterscheiden. Vorzugsweise unterscheiden sich die Massenanteile der Komponenten der Metalllegierung des Zylinders von denen der Verschlussteile um weniger als 10 Gew.-% von der Metalllegierung der Verschlussteile. Somit besitzen Verschlussteile und Zylinderrohr ähnliche physikalische Eigenschaften und lassen sich besonders gut miteinander verschweißen.

Die verwendete Stahllegierung besitzt vorzugsweise einen Kohlenstoffanteil von unter 0,5 Gew.-%. Die Legierungsbestandteile Vanadium, Chrom und Mangan sind einzeln oder kombiniert bevorzugt mit einem Anteil von 0,01 bis 2 Gew.-% enthalten.

Zudem ist der Arbeitszylinder dadurch gekennzeichnet, dass mindestens ein Verschlussteil eine sich axial öffnende, umlaufende konkave Aufnahmekontur aufweist, in die das Zylinderrohr eingreift, wobei die Aufnahmekontur das Zylinderrohr radial übergreift und eine Ringschweißnahtmittelachse, mit der Hauptlängsachse einen Ringschweißnahtneigungswinkel alpha einschließt, der 110 bis 160 Grad beträgt. Diese über 90 Grad hinausgehende Schrägneigung wird nachfolgend auch als negativ schräg geneigt bezeichnet.

Die sich axial öffnende umlaufende konkave Aufnahmekontur wird durch eine Ringnut in dem betreffenden Verschlussteil bereitgestellt, welche radiale Seitenwandungen aufweist. Dabei ist die radial außen angeordnete Seitenwandung geneigt und bildet eine konische Form aus. Die konkave Aufnahmekontur bildet somit eine radiale Übergreifung aus. Die radial innen angeordnete Seitenwandung ist vorzugsweise nicht geneigt und bildet vorzugsweise eine zylindrische Form aus. Der Querschnitt der Aufnahmekontur entspricht damit bevorzugt einem konkaven Keil. Das Zylinderrohr ist an dem entsprechenden Zylinderrohrende korrespondierend zu der Aufnahmekontur ausgebildet und weist hierzu eine schräge Ringfläche auf, deren Neigungswinkel dem Neigungswinkel der äußeren radialen Seitenwandung der Aufnahmekontur entspricht. Der Querschnitt der Wandung des Zylinderrohrendes entspricht damit bevorzugt einem Keil, der sich in die Aufnahmekontur einpasst.

Zwischen den beschriebenen geneigten ringförmigen Flächen der Aufnahmekontur und des Zylinderrohrs ist die Laserringschweißnaht angeordnet. Der Neigungswinkel der Laserringschweißnaht entspricht dabei dem Neigungswinkel der beiden geneigten ringförmigen Flächen.

Der erfindungsgemäße geschweißte Arbeitszylinder weist eine Reihe erheblicher Vorteile gegenüber Arbeitszylindern nach dem Stand der Technik auf.

Ein erster wesentlicher Vorteil liegt darin, dass insbesondere das Zylinderrohr über das Ablängen hinaus kaum oder überhaupt nicht spanend bearbeitet werden muss. So müssen insbesondere keine Gewinde geschnitten oder Nuten gedreht werden. Die spanende Bearbeitung des Zylinderohrs ist vorteilhaft auf die Ausbildung der geneigten stirnseitigen Ringfläche beschränkt.

Dadurch liegt zunächst der unmittelbare Vorteil vor, dass der sonst erforderliche Aufwand an Zeit, Bearbeitungsmaschinen, Werkzeugkosten und Energie für eine spanende Bearbeitung eingespart werden kann.

Weiterhin besteht der Vorteil einer drastischen Materialeinsparung und damit der Schonung von Rohstoffressourcen, weil das Zylinderrohr nur noch etwa die Hälfte der Rohrwandstärke eines geschraubten Differenzialarbeitszylinders aufweisen muss. Zulagen beispielsweise in der Rohrwandstärke zum Ausgleich des Materialabtrags für ein geschnittenes Gewinde können entfallen.

Durch den Entfall spanender Bearbeitung des Zylinderrohrs und vorzugsweise auch der Kolbenstange wird zudem die Qualität maßgeblich gesteigert. Die axiale Rundlaufgenauigkeit wird infolge des Entfalls von Krafteinträgen durch eine spanende Bearbeitung nicht mehr beeinträchtigt. Vielmehr bleibt die axiale Rundlaufgenauigkeit der Ausgangsprodukte für die Zylinderrohre und gegebenenfalls auch der Kolbenstangen vollständig erhalten. Damit weist der erfindungsgemäße Arbeitszylinder eine höhere Präzision auf. So kann auch die axiale Kolbenstangenbewegung ohne das nach dem Stand der Technik bekannte Problem des Ausknickens der Kolbenstangen im Endanschlag bereitgestellt werden. Damit wird zugleich der Verschleiß der Zylinderführungen im Führungsverschlussteil reduziert. Durch den Entfall der spanenden Bearbeitung von Zylinderrohr und gegebenenfalls Kolbenstange werden zugleich Minderungen der Belastbarkeit infolge von Kerbwirkungen vermieden.

Es wurde gefunden dass durch die konkave Aufnahmekontur im Zusammenwirken mit dem erfindungsgemäßen Ringschweißnahtneigungswinkel mit dem selben Mittel zugleich drei vorteilhafte Wirkungen erreicht werden. Zum ersten wird durch die radiale Übergreifung des Zylinderrohrs eine formschlüssige Aufnahme von Beulungskräften, die durch den Arbeitsdruck des Druckmediums bewirkt werden, erreicht. Die formschlüssige Aufnahme der radial wirkenden Beulungskräfte entlastet die Laserringschweißnaht, so dass die stoffschlüssige Kraftübertragung an der Laserringsschweißnaht praktisch ausschließlich für axiale Kräfte zu Verfügung steht. Zum zweiten wird durch die Neigung ohne Zusatzmaßnahmen eine Ringschweißnahttiefe erreicht, die die Zylinderrohrwanddicke übersteigt und so eine höhere Kraftübertragung ermöglicht. Zum dritten wird zugleich ein Montagevorteil erreicht, da sich bei einer axialen Zustellbewegung das Zylinderrohr und das betreffende Verschlussteil selbsttätig zentrieren.

Ein weiterer Vorteil liegt in der absoluten Dichtheit des Differenzialarbeitszylinders an den Verbindungsstellen zwischen Zylinderrohr und den Verschlussteilen. Vorteilhaft ist hierbei zudem, dass die Dichtheit ohne die sonst nach dem Stand der Technik erforderlichen Dichtungen bereitstellbar ist. Der mögliche Entfall dieser alterungsanfälligen Bauteile bewirkt neben Kosteneinsparungen eine Qualitätsverbesserung und eine Erhöhung der Lebensdauer. Zudem werden Verunreinigungen durch alternde Dichtungen ausgeschlossen.

Ein weiterer Vorteil liegt in der erhöhten Betriebssicherheit. Ein wie bei Gewinden mögliches axiales Bewegungsspiel zwischen Zylinderrohr und Verschlussteilen bei Lastwechseln oder eine Lockerung wie bei Gewinden entfällt. Weiterhin ergeben sich vorteilhaft Einsparungen durch den Entfall von sonst erforderlichen Sicherungselementen. Letztlich entfällt auch die sonst erforderliche Sicherung der eigentlichen Sicherungselemente, welche bei lösbaren Verbindungen erforderlich ist. Eine solche Sicherung erfolgt gemäß dem Stand der Technik beispielweise über ein Verkleben der Sicherungselemente. Der Entfall des Verklebens ist mit weiteren wichtigen Vorteilen verbunden. Zum Ersten entfallen die Kosten für die sehr teuren Schraubensicherungsklebstoffe. Zum zweiten entfallen die Reinigungen der Oberflächen für die Herstellung von deren Haftfähigkeit für die Schraubensicherungsklebstoffe, die nach dem Stand der Technik oft gesundheitsbedenkliche Reinigungschemikalien erfordern. Damit entfallen die besonderen Maßnahmen zur Absicherung des Gesundheitsschutzes und des Umweltschutzes. Zum dritten wird das Problem überwunden, dass auch durch Schraubensicherungsklebstoffe gesicherte lösbare Verbindungen bei Stoßbelastungen der Gefahr einer Lockerung unterliegen können.

Als ein Aspekt der erhöhten Betriebssicherheit ist auch die erhöhte Manipulationssicherheit anzuführen. Zerstörungsfreie Eingriffe in den Zylinderinnenraum sind ausgeschlossen. Mögliche Verletzungsquellen im Zusammenhang mit einer unsachgemäßen Öffnung oder einer unsachgemäßen Wiedermontage eines Differenzialarbeitszylinders durch ungeschultes Personal entfallen.

Durch das Laserschweißverfahren kommt es im Bereich der Laserringschweißnähte nur zu einer stark lokal begrenzten Erhitzung des Materials. So können Bauteile mit thermisch anfälligen Materialien, wie insbesondere Dichtungen, in einer Nähe von wenigen Millimetern um die geplante Schweißnaht dennoch verschweißt werden, welche bei anderen Schweißverfahren geschädigt würden.

Auch werden Verzunderungen an den innenliegenden Oberflächenabschnitten des Zylinderrohr und der Verschlussteile, besonders in der Nähe der Schweißnähte, vermieden, welche sonst nach dem Stand der Technik aufwändig entfernt werden müssten.

Vorteilhaft ist ferner die Reduzierung thermischer Spannungen in den Kopplungspartnern der Schweißverbindung, da mittels des Laserschweißens lediglich eine relativ geringe Streckenenergie (Energiemenge bezogen auf die Schweißnahtlänge) eingebracht werden muss.

Ein weiterer Vorteil besteht darin, dass der Verlauf, die Schweißnahttiefe und der Winkel der Laserringschweißnähte weitestgehend durch die Bewegung, die Streckenenergie und den Winkel des Laserstrahls relativ zu dem herzustellenden Arbeitszylinder bestimmt werden kann. So kann der Verlauf und der Winkel insbesondere durch die Veränderung der Position des Lasers relativ zu den Kopplungspartnern gezielt ausgerichtet werden.

In einer ersten besonders bevorzugten Ausbildung des erfindungsgemäßen Arbeitszylinders liegt der Arbeitszylinder als doppelt wirkender Arbeitszylinder vor und ist als Differenzialarbeitszylinder ausgebildet.

In dieser Ausbildung ist das erste Verschlussteil als Führungsverschlussteil und das zweite Verschlussteil als Bodenverschlussteil ausgebildet. Daher wird hier das erste Zylinderrohrende als führungsseitiges Zylinderrohrende und das zweite Zylinderrohrende als bodenseitiges Zylinderrohrende bezeichnet. Die erste Laserringschweißnaht ist somit zwischen dem Führungsverschlussteil und dem führungsseitigen Zylinderrohrende und die zweite Laserringschweißnaht ist somit zwischen dem Bodenverschlussteil und dem bodenseitigen Zylinderrohrende angeordnet.

Die Kolbeneinheit weist bei dem Differenzialarbeitszylinder einen Kolben und eine Kolbenstange auf. Zu dem Aufbau der so ausgebildeten Kolbeneinheit wird auf die oben zum Arbeitszylinder vorliegenden Beschreibungsinhalte Bezug genommen.

Der Kolben der Kolbeneinheit ist in dem Zylinderinnenraum angeordnet und trennt so den Zylinderinnenraum in einen Kolbenbodenarbeitsraum, auch verkürzt als Kolbenbodenraum bezeichnet, und einen Kolbenstangenarbeitsraum, verkürzt auch als Kolbenstangenraum bezeichnet. Die in dem Kolbenbodenraum wirksame Fläche des Kolbens ist auf der kolbenbodenseitigen Seite des Kolbens größer als auf der kolbenstangenraumseitigen Seite des Kolbens. Bei gleichem Druck des Druckmediums wirkt somit kolbenbodenraumseitig eine größere Kraft auf den Kolben als kolbenstangenraumseitig. Eine auf den Kolben wirkende Kraft wird mittels der Kolbenstange aus dem Zylinderinnenraum nach außen übertragen, wofür die Kolbenstange das Führungsverschlussteil gleitend durchsetzt.

In einer zweiten besonders bevorzugten Ausbildung des erfindungsgemäßen Arbeitszylinder liegt der Arbeitszylinder ebenfalls als doppelt wirkender Arbeitszylinder vor; er ist hier jedoch als Gleichgangzylinder ausgebildet.

Bei dem Gleichgangzylinder gemäß dieser vorteilhaften Weiterbildung ist das erste Verschlussteil wie bei einem Differenzialarbeitszylinder als ein Führungsverschlussteil ausgebildet. Zudem ist als besonderes Merkmal auch das zweite Verschlussteil als ein weiteres Führungsverschlussteil ausgebildet. Das Führungsverschlussteil und das weitere Führungsverschlussteil werden nachfolgend zusammengefasst auch als die Führungsverschlussteile bezeichnet. Die erste Laserringschweißnaht ist somit zwischen dem Führungsverschlussteil und dem ersten Zylinderrohrende und die zweite Laserringschweißnaht ist somit zwischen dem weiteren Führungsverschlussteil und dem zweiten Zylinderrohrende angeordnet.

Die Kolbeneinheit weist auch hier einen Kolben und eine Kolbenstange auf. Der Kolben ist in dem Zylinderinnenraum angeordnet und trennt diesen in einen ersten und einen zweiten Kolbenstangenarbeitsraum. Hierzu überragt die Kolbenstange axial beidseitig den Kolben und wird beidseitig aus dem Kolbeninnenraum durch die Verschlussteile hindurch, die hier beide als Führungsverschlussteile vorliegen, aus dem Kolbeninnenraum herausgeführt. Somit durchsetzt die Kolbenstange gleitend beide Führungsverschlussteile.

Beide Kolbenstangenarbeitsräume weisen den gleichen Querschnitt und damit der Kolben beidseitig gleichgroße wirksame Angriffsflächen für das Druckmedium auf. Die auf den Kolben wirkende Kraft und die Länge des von dem Kolben ausgeführten Arbeitsweges ist gleich, unabhängig davon, ob ein bestimmter nach Druck und Volumen gleicher Druckstrom des Druckmediums den ersten oder den zweiten Kolbenstangenarbeitsraum beaufschlagt. Wegen dieses in beiden Betätigungsrichtungen gleichen Verhaltens wird der Gleichgangzylinder häufig auch als Lenkzylinder verwandt und deshalb auch als Lenkzylinder bezeichnet. Entsprechend einer anderen Weiterbildung ist der Arbeitszylinder als ein Plungerzylinder ausgebildet. Hierbei handelt es sich um einen einfach wirkenden Arbeitszylinder.

Gemäß dieser Weiterbildung ist das erste Verschlussteil als ein Führungsverschlussteil und das zweite Verschlussteil als ein Bodenverschlussteil ausgebildet. Bei dem ersten Zylinderrohrende handelte es sich um ein führungsseitiges Zylinderrohrende und bei dem zweiten Zylinderrohrende um ein bodenseitiges Zylinderrohrende. Wie bei einem Differenzialarbeitszylinder ist die erste Laserringschweißnaht somit zwischen dem Führungsverschlussteil und dem führungsseitigen Zylinderrohrende und die zweite Laserringschweißnaht somit zwischen dem Bodenverschlussteil und dem bodenseitigen Zylinderrohrende angeordnet.

Die Kolbeneinheit ist bei dem Plungerzylinder durch einen Tauchkolben ausgebildet. Der Tauchkolben ist in dem Zylinderinnenraum angeordnet. In dem Zylinderinnenraum ist nur ein Arbeitsraum ausgebildet. Der Tauchkolben durchsetzt gleitend das Führungsverschlussteil. Bei einer Beaufschlagung des Arbeitsraums mit einem Druckstrom des Druckmediums wird der Tauchkolben entsprechend dem eingeführten Volumen des Druckstroms axial verdrängt und führt eine Ausfahrtbewegung aus. Die Einfahrtbewegung wird durch eine in umgekehrter Richtung von außen angreifende Kraft bewirkt.

Erfindungsgemäß ist der Arbeitszylinder dadurch gekennzeichnet, dass in dem Zylinderinnenraum zwischen dem ersten Verschlussteil und einer Zylinderrohrinnenwandung des Zylinderrohrs an dessen erstem Zylinderrohrende axial beabstandet von der ersten Laserringschweißnaht ein erster umlaufender Dichtring angeordnet ist, der einen ersten druckgetrennten Ringabschnitt ausbildet, der zwischen dem ersten umlaufenden Dichtring und der ersten Laserringschweißnaht angeordnet ist und/oder dass in dem Zylinderinnenraum zwischen dem zweiten Verschlussteil und einer Zylinderrohrinnenwandung des Zylinderrohrs an dessen zweitem Zylinderrohrende axial beabstandet von der zweiten Laserringschweißnaht ein zweiter umlaufender Dichtring angeordnet ist, der einen zweiten druckgetrennten Ringabschnitt ausbildet, der zwischen dem zweiten umlaufenden Dichtring und der zweiten Laserringschweißnaht angeordnet ist.

Erfindungsgemäß ist also mindestens einer Laserringschweißnaht ein umlaufender Dichtring vorgelagert. Vorzugsweise ist beiden Laserringschweißnähten jeweils ein umlaufender Dichtring vorgelagert. Der umlaufende Dichtring wird nachfolgend auch als O-Ring bezeichnet.

Der O-Ring trennt zylinderrauminnenseitig einen Ringabschnitt vor der jeweiligen Laserringschweißnaht von dem übrigen Zylinderinnenraum druckdicht ab. Es wurde überraschend gefunden, dass durch die Ausbildung einer Laserringschweißnaht die Streckenenergie so gering eingestellt werden kann, dass ein thermisch empfindlicher O-Ring auch in einem Nahbereich der Laserringschweißnaht nicht beschädigt wird. Als Nahbereich wird ein axialer Abstand zwischen der Laserringschweißnaht und dem O-Ring verstanden, der geringer als ein Zylinderrohrinnendurchmesser ist und besonders bevorzugt nicht mehr als das Vierfache einer Zylinderrohrwanddicke beträgt.

Der O-Ring bewirkt, das der Ringabschnitt von dem Arbeitsdruck des Druckmediums getrennt ist. Damit wird ein axialer Abschnitt des Zylinderrohrs unmittelbar vor und an der Laserringschweißnaht von innen nicht mit dem Arbeitsdruck des Druckmediums beaufschlagt und unterliegt somit nicht einer Beulungsbelastung. Damit wird vorteilhaft zugleich mit einem sehr einfachen Mittel eine sonst auftretende radiale Belastung der Laserringschweißnaht vermieden. Vielmehr besteht ausschließlich die axiale Belastung. Die axiale Belastng beruht darauf, dass auf die Grundfläche des jeweiligen Verschlussteils der Arbeitsdruck des Druckmediums wirkt. Vorteilhaft wird somit eine mehrachsige Belastung der Laserringschweißnaht und dort eine mehrachsige Materialspannung vermieden.

Zugleich wird durch den vorgelagerten O-Ring ein Schutz des mindestens einen Arbeitsraums oder je nach Arbeitszylinderart bei O-Ringen an beiden Seiten auch beider Arbeitsräume vor Verschmutzungen erreicht. Etwaige Emissionen während des Laserschweißens oder Partikel, die sich im Bereich der Laserschweißnaht von den Kopplungspartnern ablösen könnten, werden in dem jeweiligen Ringabschnitt durch den O-Ring vor einem Übertritt in den Arbeitsraum zurückgehalten.

Die Laserringschweißnähte weisen gemäß einer anderen vorteilhaften Weiterbildung eine Laserringschweißnahttiefe auf, welche zu einer Zylinderrohrwanddicke in einem Verhältnis von 1,1 bis 2,5 steht.

Verläuft die Laserringschweißnaht nicht senkrecht durch die Zylinderrohrwand, ist die Laserringschweißnahttiefe größer als die Dicke der Zylinderrohrwand. So weist die Verbindung zwischen den Verschlussteilen besonders vorteilhaft eine höhere Stabilität auf, da die Kraftübertragung in der Schweißnaht auf eine größere Fläche verteilt und damit optimiert ist.

Daraus ergibt sich als ein weiterer Vorteil, dass die Rohrwandstärke des Zylinderrohrs für bestimmte Anwendungen weiter reduziert werden kann.

Zudem ist es gemäß dieser vorteilhaften Weiterbildung auch möglich, die Laserringschweißnahttiefe bereits dadurch größer auszubilden als die Zylinderrohrwanddicke, dass die Laserringschweißnaht tiefer in das Verschlussteil eingebracht wird, als das Zylinderrohr dick ist. Damit liegt eine tiefer liegende Schweißnahtwurzel vor. Vorzugsweise weist die Laserringschweißnahttiefe mindestens das 1,2-Fache der Zylinderrohrdicke auf. Es wurde überraschend gefunden, dass durch die so bewirkten Gefügeänderungen im Verschlussteil eine Erhöhung der Belastbarkeit der Ringschweißnähte erreicht wird.

Generell gilt, dass die unterschiedlichen vorteilhaften Weiterbildungen der Ausbildung der Laserringschweißnähte nicht auf bestimmte Zylinderarten festgelegt sind. Zudem können an ein und demselben Arbeitszylinder auch unterschiedliche Ausbildungen der Laserringschweißnähte kombiniert vorliegen, sofern der resultierende Arbeitszylinder in den durch die folgenden Ansprüche definierten Schutzbereich fällt. II

Die Erfindung wird als Ausführungsbeispiel anhand von
- Fig. 1: Gleichgangzylinder (Übersicht), der nicht durch die Ansprüche abgedeckt ist
- Fig. 2: Vergrößerungsausschnitt zu Fig. 1 zur Darstellung der konkaven Aufnahmekontur
- Fig. 3: Vergrößerungsausschnitt zu Fig. 1 in Explosionsdarstellung
- Fig. 4: Vergrößerung einer Laserschweißnaht zur Darstellung des Querschnitts und des Ringschweißnahtwinkels beta
näher erläutert.

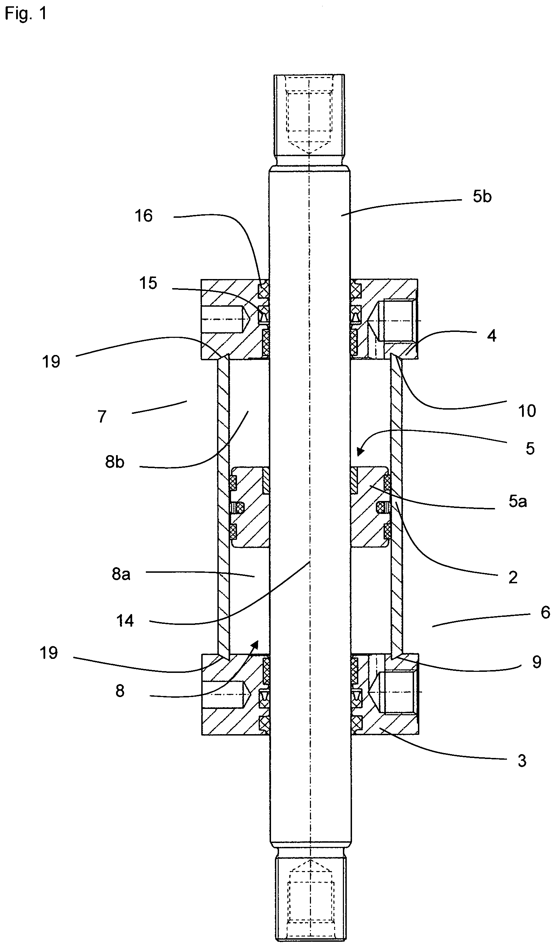

Fig. 1 zeigt ein Ausführungsbeispiel, bei dem der Arbeitszylinder als Gleichgangarbeitszylinder ausgebildet ist. Bei dem Gleichgangarbeitszylinder sind beide Verschlussteile 3, 4, also das erste Verschlussteil 3 und das zweite Verschlussteil 4 als Führungsverschlussteile ausgebildet. Der Kolben 5a ist im axial mittleren Bereich der Kolbenstange 5b angeordnet, welche durch beide Verschlussteile 3, 4 geführt wird. Kolben 5a und Kolbenstange 5b bilden zusammen den Kolben 5 aus.

Das erste Zylinderrohrende 6 ist mittels der negativ geneigten ersten Laserschweißnaht 9 mit dem ersten Verschlussteil 3 und das zweite Zylinderrohrende mittel der negativ geneigten zweiten Laserschweißnaht 10 mit dem zweiten Verschlussteil 4 verbunden.

Die beiden Verschlussteile 3, 4 weisen jeweils in eine konkave Aufnahmekontur 19 auf, in denen die schräg ausgebildeten Ringflächen der jeweiligen Zylinderrohrenden 6, 7 eingeschoben und dort mittels des Laserschweißverfahrens verschweißt sind.

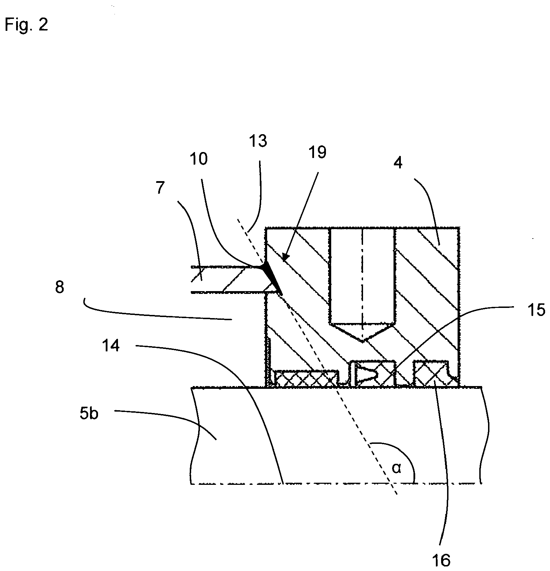

In Fig. 2 ist das Ausführungsbeispiel aus Fig. 1 in einer Vergrößerung detaillierter dargestellt

Das zweite Zylinderohrende 7 ist hier bereits in die keilförmig ausgebildete konkave Aufnahmekontur 19 eingeschoben und mittels der zweiten umlaufenden Laserringschweißnaht 10 mit dem zweiten Verschlussteil 4 verschweißt.

Die Ringschweißnahtmittelachse 13 schließt mit der Hauptlängsachse 14 den Ringschweißnahtneigungswinkel alpha ein.

Der Ringschweißnahtwinkel alpha weist erfindungsgemäß einen Winkel zwischen 110 und 160 Grad, im Ausführungsbeispiel von etwa 120 Grad, auf.

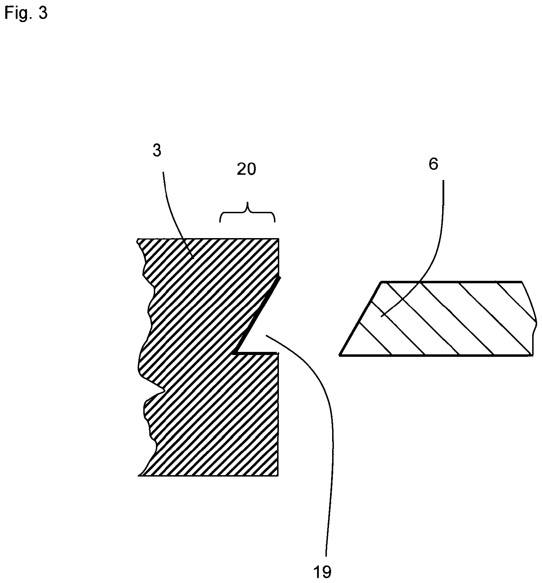

In Fig. 3 sind die Kopplungspartner gemäß Fig. 1 ergänzend in einer schematischen Explosionsansicht dargestellt. Fig. 1 zeigt das erste Zylinderrohrende 6 und das erste Verschlussteil 3 mit der keilförmigen konkaven Aufnahmekontur 19 vor dem Fügen. Die konkave Aufnahmekontur 19 ist so ausgebildet, dass sie das erste Zylinderrohrende 6 aufnehmen kann und mit ihm eine gemeinsame Kontaktfläche bildet, an der dann die erste Laserringschweißnaht 9 angeordnet ist. Fig. 3 zeigt, dass sich die konkave Aufnahmekontur 19 axial in Richtung des Zylinderrohrs 2 öffnet. Radial von innen auf das Zylinderrohr 2 wirkende Beulungskräfte werden so formschlüssig von einer radialen Übergreifung 20 aufgenommen. Hierbei handelt es sich um den radial außen liegenden Abschnitt der konkaven Aufnahmekontur 19.

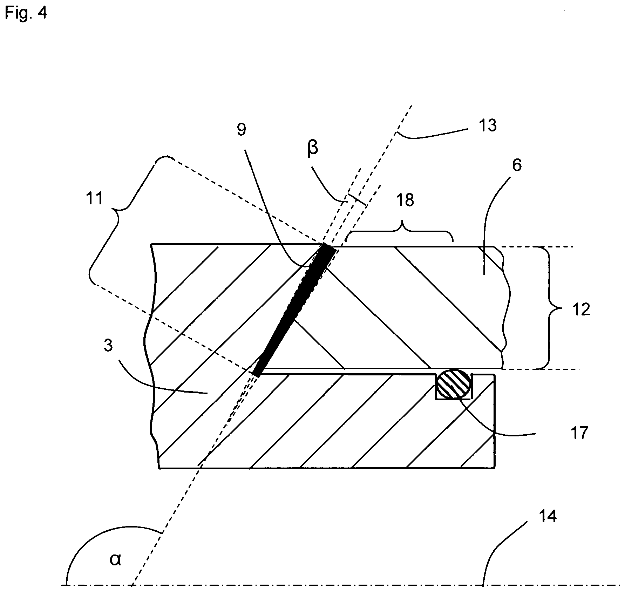

In Fig. 4 wird eine Laserschweißnaht vergrößert dargestellt. Die hier dargestellte erste Laserringschweißnaht 9, zwischen dem ersten Zylinderrohrende 2 und dem ersten Verschlussteil 3, zeigt exemplarisch eine Laserschweißnaht gemäß der vorliegenden Erfindung auf.

Diese erste Laserringschweißnaht 9 besitzt eine Ringschweißnahttiefe 11 und eine Ringschweißnahtmittelachse 13. In dieser Ausführung ist die Ringschweißnahttiefe 11 größer als die Zylinderrohrwanddicke 12.

Die Laserschweißnaht weist eine leichte Konizität auf. Legt man zwei Tangenten an die Randkontur der Laserschweißnaht, so schneiden sich diese und schließen einen Ringschweißnahtwinkel beta ein. Der Ringschweißnahtwinkel beta beträgt bevorzugt nicht mehr als 15 Grad und besonders bevorzugt nicht mehr als 10 Grad. Die Ringschweißnahtmittelachse 13 ist gleichzeitig die Winkelhalbierende des Ringschweißnahtwinkels beta und schließt mit der Hauptlängsachse 14 den Ringschweißnahtneigungswinkel alpha ein. Weiterhin verläuft die Ringschweißnahtmittelachse 13 entlang der Kontaktfläche von erstem Zylinderrohrende 6 und erstem Verschlussteil 3.In dieser Ausführung beträgt der Ringschweißnahtneigungswinkel alpha 120 Grad.

Zugleich zeigt Fig. 4 ein Ausführungsbeispiel mit einem der ersten Laserringschweißnaht 9 vorgelagerten umlaufenden Dichtring 17 (O-Ring), der den Bereich vor der ersten Laserrringschweißnaht 9 druckdicht von dem Druckmedium abtrennt. Bei diesem Bereich handelt es sich um den druckgetrennten Ringabschnitt 18. Axial betrachtet befindet sich der druckgetrennter Ringabschnitt 18 zwischen dem Dichtring 17 (O-Ring) und der ersten Laserringschweißnaht 9 In diesem Ringabschnitt 18 wirken keine radialen Kräfte von innen auf das Zylinderrohr an seinem ersten Zylinderrohrende 6. Die erste Laserringschweißnaht 9 wird somit lediglich mit einer axialen Zugspannung belastet.. Damit wird in diesem Bereich das Zylinderohr 2 nicht mit Beulungskräften belastet und die erste Laserringschweißnaht 9 entlastet. Der Dichtring 17 (O-Ring) besteht in dieser Ausführung aus einem elastischen Polymer. Der Wärmeeintrag beim Laserschweißen bleibt hinreichend gering, um den Dichtring 17 (O-Ring) trotz des Nahbereichs zu der ersten Laserringschweißnaht 9 nicht zu beschädigen. Zugleich wird aus Fig. 4 in Verbindung mit Fig. 3 ersichtlich, dass durch die schmale Ausbildung der erfindungsgemäßen Laserringschweißnähte 9, 10 das Material im Bereich der radialen Überdeckung 20 nur in geringer Tiefe thermisch belastet wird, so dass das entsprechende Verschlussteil lediglich eine geringe Materialstärke an der radialen Übergreifung 20 aufweisen muss.

### Verwendete Bezugszeichen

- 1: Arbeitszylinder
- 2: Zylinderrohr
- 3: erstes Verschlussteil
- 4: zweites Verschlussteil
- 5: Kolbeneinheit
- 5a: Kolben
- 5b: Kolbenstange
- 6: erstes Zylinderrohrende
- 7: zweites Zylinderrohrende
- 8: Zylinderinnenraum
- 8a: erster Arbeitsraum
- 8b: zweiter Arbeitsraum
- 9: erste umlaufende Laserringschweißnaht
- 10: zweite umlaufende Laserringschweißnaht
- 11: Ringschweißnahttiefe
- 12: Zylinderrohrwanddicke
- 13: Ringschweißnahtmittelachse
- 14: Hauptlängsachse
- 15: Dichtung
- 16: Führung
- 17: umlaufender Dichtring
- 18: druckgetrennter Ringabschnitt
- 19: konkave Aufnahmekontur
- 20: radiale Übergreifung
- α: Ringschweißnahtneigungswinkel alpha
- β: Ringschweißnahtwinkel beta

## Patentansprüche

1. Arbeitszylinder (1),
aufweisend ein Zylinderrohr (2) mit einer Hauptlängsachse, ein erstes Verschlussteil (3), ein zweites Verschlussteil (4) und eine Kolbeneinheit (5),
wobei das Zylinderrohr (2) ein erstes Zylinderrohrende (6) und ein zweites Zylinderrohrende (7) aufweist,
wobei das erste Verschlussteil (3) an dem ersten Zylinderrohrende (6) angeordnet ist,
wobei das zweite Verschlussteil (4) an dem zweiten Zylinderrohrende angeordnet (7) ist,
wobei das Zylinderrohr (2) und die Verschlussteile (3, 4) einen Zylinderinnenraum (8) ausbilden,
wobei die Kolbeneinheit (5) axial, entlang der Hauptlängsachse verschieblich in dem Zylinderinnenraum (8) angeordnet ist und mindestens einen Arbeitsraum in dem Zylinderinnenraum (8) ausbildet wobei die Kolbeneinheit (5) das erste Verschlussteil (3) gleitend durchsetzt, wobei das erste Verschlussteil (3) mit dem Zylinderrohr (2) mittels einer ersten umlaufenden Laserringschweißnaht (9) und das zweite Verschlussteil (4) mit dem Zylinderrohr (2) mittels einer zweiten umlaufenden Laserringschweißnaht (10) stoffschlüssig verbunden ist,
wobei die Laserringschweißnähte (9, 10) jeweils eine fluiddichte Dichtebene (10) ausbilden,
**dadurch gekennzeichnet,**
**dass** mindestens ein Verschlussteil (3, 4) eine sich axial öffnende, umlaufende konkave Aufnahmekontur aufweist, in die das Zylinderrohr eingreift, wobei die Aufnahmekontur das Zylinderrohr radial übergreift und dass eine Ringschweißnahtmittelachse (13) mit der Hauptlängsache (14) einen Ringschweißnahtneigungswinkel (alpha) einschließt, der 110 bis 160 Grad beträgt und
**dass** in dem Zylinderinnenraum (8) zwischen dem ersten Verschlussteil (3) und einer Zylinderrohrinnenwandung des Zylinderrohrs (2) an dessen erstem Zylinderrohrende (6) axial beabstandet von der ersten Laserringschweißnaht (9) ein erster umlaufender Dichtring (17) angeordnet ist, der einen ersten druckgetrennten Ringabschnitt (18), angeordnet zwischen dem ersten umlaufenden Dichtring (17) und der ersten Laserringschweißnaht (9), ausbildet und/oder dass in dem Zylinderinnenraum (8) zwischen dem zweiten Verschlussteil (4) und einer Zylinderrohrinnenwandung des Zylinderrohrs (2) an dessen zweitem Zylinderrohrende (7) axial beabstandet von der zweiten Laserringschweißnaht (10) ein zweiter umlaufender Dichtring angeordnet ist, der einen zweiten druckgetrennten Ringabschnitt, angeordnet zwischen dem zweiten umlaufenden Dichtring und der zweiten Laserringschweißnaht (10), ausbildet.

2. Arbeitszylinder (1) nach Anspruch 1,
**dadurch gekennzeichnet,**
**dass** der Arbeitszylinder (1) doppelt wirkend und als Differenzialarbeitszylinder ausgebildet ist,
wobei das erste Verschlussteil (3) als Führungsverschlussteil und das zweite Verschlussteil (4) als Bodenverschlussteil ausgebildet ist,
wobei es sich bei dem ersten Zylinderrohrende (6) um ein führungsseitiges Zylinderrohrende und bei dem zweiten Zylinderrohrende (7) um ein bodenseitiges Zylinderrohrende handelt,
wobei die Kolbeneinheit (5) einen Kolben (5a) und eine Kolbenstange (5b) aufweist,
wobei der Kolben (5a) in dem Zylinderinnenraum (8) angeordnet ist und den Zylinderinnenraum (8) in einen ersten Arbeitsraum (8a), ausgebildet als Kolbenstangenarbeitsraum und einen zweiten Arbeitsraum (8b), ausgebildet als Kolbenbodenarbeitsraum, trennt und wobei die Kolbenstange (5b) das Führungsverschlussteil (3) gleitend durchsetzt.

3. Arbeitszylinder (1) nach Anspruch 1,
**dadurch gekennzeichnet,**
**dass** der Arbeitszylinder (1) doppelt wirkend und als Gleichgangzylinder ausgebildet ist,
wobei das erste Verschlussteil (3) als Führungsverschlussteil und das zweite Verschlussteil (4) als weiteres Führungsverschlussteil ausgebildet ist, wobei die Kolbeneinheit (5) einen Kolben (5a) und eine Kolbenstange (5b) aufweist,
wobei der Kolben (5a) in dem Zylinderinnenraum (8) angeordnet ist und den Zylinderinnenraum (8) in einen ersten Arbeitsraum (8a), ausgebildet als erster Kolbenstangenarbeitsraum und einen zweiten Arbeitsraum (8b), ausgebildet als zweiter Kolbenstangenarbeitsraum trennt und wobei die Kolbenstange (5b) das Führungsverschlussteil und das weitere Führungsverschlussteil gleitend durchsetzt.

4. Arbeitszylinder (1) nach Anspruch 1,
**dadurch gekennzeichnet,**
**dass** der Arbeitszylinder (1) einfach wirkend und als Plungerzylinder ausgebildet ist,
wobei das erste Verschlussteil (3) als Führungsverschlussteil und das zweite Verschlussteil (4) als Bodenverschlussteil ausgebildet ist,
wobei es sich bei dem ersten Zylinderrohrende (6) um ein führungsseitiges Zylinderrohrende und bei dem zweiten Zylinderrohrende (7) um ein bodenseitiges Zylinderrohrende handelt,
wobei die Kolbeneinheit (5) durch einen Tauchkolben ausgebildet ist, wobei der Tauchkolben in dem Zylinderinnenraum (8) angeordnet ist und in dem Zylinderinnenraum (8) einen Arbeitsraum ausbildet und wobei der Tauchkolben das Führungsverschlussteil (3) gleitend durchsetzt.

5. Arbeitszylinder (1) nach einem der vorhergehenden Ansprüche,
**dadurch gekennzeichnet,**
**dass** die Laserringschweißnähte jeweils eine Ringschweißnahttiefe (11) aufweisen,
wobei die Ringschweißnahttiefe (11) zu einer Zylinderrohrwanddicke (12) ein Verhältnis von 1,1 bis 2,5 aufweist.

## Claims

1. A working cylinder (1),
comprising a cylinder tube (2) with a main longitudinal axis, a first closure part (3), a second closure part (4) and a piston unit (5),
wherein the cylinder tube (2) comprises a first cylinder tube end (6) and a second cylinder tube end (7),
wherein the first closure part (3) is arranged at the first cylinder tube end (6), wherein the second closure part (4) is arranged at the second cylinder tube end (7),
wherein the cylinder tube (2) and the closure parts (3, 4) form a cylinder interior (8),
wherein the piston unit (5) is arranged in the cylinder interior (8) such that it is axially displaceable along the main longitudinal axis and forms at least one working chamber in the cylinder interior (8),
wherein the piston unit (5) slidingly passes through the first closure part (3), wherein the first closure part (3) is connected to the cylinder tube (2) by means of a first circumferential laser ring weld seam (9) and the second closure part (4) is connected to the cylinder tube (2) by means of a second circumferential laser ring weld seam (10) in a positive-substance manner, wherein each of the laser ring weld seams (9, 10) forms a fluid-tight sealing plane (10),
**characterized in**
**that** at least one closure part (3, 4) comprises an axially opening, circumferential concave receiving contour in which the cylinder tube engages, wherein the receiving contour radially engages over the cylinder tube, and that a ring weld seam centre axis (13) and the main longitudinal axis (14) enclose a ring weld seam inclination angle (alpha) which is 110 to 160 degrees, and
**that** a first circumferential sealing ring (17) is arranged, axially spaced from the first laser ring weld seam (9), in the cylinder interior (8) between the first closure part (3) and a cylinder tube inner wall of the cylinder tube (2) at its first cylinder tube end (6) and forms a first pressure-separated ring section (18) which is arranged between the first circumferential sealing ring (17) and the first laser ring weld seam (9), and/or that a second circumferential sealing ring is arranged, axially spaced from the second laser ring weld seam (10), in the cylinder interior (8) between the second closure part (4) and a cylinder tube inner wall of the cylinder tube (2) at its second cylinder tube end (7) and forms a second pressure-separated ring section which is arranged between the second circumferential sealing ring and the second laser ring weld seam (10).

2. The working cylinder according to claim 1,
**characterized in**
**that** the working cylinder (1) is designed as a double-acting and differential working cylinder,
wherein the first closure part (3) is designed as a guide closure part and the second closure part (4) is designed as a bottom closure part,
wherein the first cylinder tube end (6) is a guide-side cylinder tube end and the second cylinder tube end (7) is a bottom-side cylinder tube end,
wherein the piston unit (5) comprises a piston (5a) and a piston rod (5b),
wherein the piston (5a) is arranged in the cylinder interior (8) and divides the cylinder interior (8) into a first working chamber (8a), designed as a piston rod working chamber, and into a second working chamber (8b), designed as a piston bottom working chamber, and wherein the piston rod (5b) slidingly passes through the guide closure part (3).

3. The working cylinder (1) according to claim 1,
**characterized in**
**that** the working cylinder (1) is designed as a double-acting and differential working cylinder,
wherein the first closure part (3) is designed as a guide closure part and the second closure part (4) is designed as a further guide closure part,
wherein the piston unit (5) comprises a piston (5a) and a piston rod (5b),
wherein the piston (5a) is arranged in the cylinder interior (8) and separates the cylinder interior (8) into a first working chamber (8a), designed as a first piston rod working chamber, and a second working chamber (8b), designed as a second piston rod working chamber, and wherein the piston rod (5b) slidingly passes through the guide closure part and through the further guide closure part.

4. The working cylinder according to claim 1,
**characterized in**
**that** the working cylinder (1) is designed as a single-acting and plunger cylinder,
wherein the first closure part (3) is designed as a guide closure part and the second closure part (4) is designed as a bottom closure part,
wherein the first cylinder tube end (6) is a guide-side cylinder tube end and the second cylinder tube end (7) is a bottom-side cylinder tube end,
wherein the piston unit (5) is designed as a plunger piston,
wherein the plunger piston is arranged in the cylinder interior (8) and forms a working chamber in the cylinder interior (8), and wherein the plunger piston slidingly passes through the guide closure part (3).

5. The working cylinder according to claim 1,
**characterized in**
**that** each of the laser ring weld seams has a ring weld seam depth (11),
wherein the ring weld seam depth (11) has a ratio of 1.1 to 2.5 with respect to a cylinder tube wall thickness (12).

## Revendications

1. Cylindre de travail (1),
présentant un tube cylindrique (2) ayant un axe longitudinal principal, un premier élément de fermeture (3), un deuxième élément de fermeture (4) et une unité de piston (5),
où le tube cylindrique (2) comprend une première extrémité du tube cylindrique (6) et une deuxième extrémité du tube cylindrique (7),
où le premier élément de fermeture (3) est disposé sur la première extrémité du tube cylindrique (6),
où le deuxième élément de fermeture (4) est disposé sur la deuxième extrémité du tube cylindrique (7),
où le tube cylindrique (2) et les éléments de fermeture (3, 4) forment un espace intérieur de cylindre (8),
où l'unité de piston (5) est disposée de manière à pouvoir coulisser axialement dans l'espace intérieur de cylindre (8) le long de l'axe longitudinal principal et forme au moins un espace de travail dans l'espace intérieur de cylindre,
où l'unité de piston (5) traverse de manière coulissante le premier élément de fermeture (3),
où le premier élément de fermeture (3) est relié par matière au tube cylindrique (2) au moyen d'une première soudure annulaire au laser (9) périphérique et le deuxième élément de fermeture (4) est relié par matière au tube cylindrique (2) au moyen d'une deuxième soudure annulaire au laser (10) périphérique,
où les soudures annulaires au laser (9, 10) forment respectivement un plan d'étanchéité (10) étanche aux fluides,
est **caractérisé en ce**
**qu'**au moins un élément de fermeture (3, 4) présente un contour de logement concave périphérique s'ouvrant axialement, dans lequel s'engage le tube cylindrique, le contour de logement recouvrant radialement le tube cylindrique, et en ce qu'un axe central de soudure annulaire (13) forme avec l'objet longitudinal principal (14) un angle d'inclinaison de soudure annulaire (alpha) qui est de 110 à 160 degrés, et
**qu'**une première bague d'étanchéité périphérique (17) est disposée dans l'espace intérieur de cylindre (8) entre le premier élément de fermeture (3) et une paroi intérieure du tube cylindrique (2) à sa première extrémité du tube cylindrique (6) à une distance axiale de la première soudure annulaire au laser (9), laquelle bague d'étanchéité comprend une première section annulaire (18) séparée par pression, disposée entre la première bague d'étanchéité périphérique (17) et la première soudure annulaire au laser (9), et/ou en ce que, dans l'espace intérieur (8) du cylindre, entre le deuxième élément de fermeture (4) et une paroi intérieure du tube cylindrique (2), à la deuxième extrémité (7) de ce dernier, est disposée, à distance axiale de la deuxième soudure annulaire au laser (10), une deuxième bague d'étanchéité périphérique qui forme une deuxième section annulaire séparée par pression, disposée entre la deuxième bague d'étanchéité périphérique et la deuxième soudure annulaire au laser (10).

2. Cylindre de travail (1) selon la revendication 1
est **caractérisé en ce**
**que** le cylindre de travail (1) est à double effet et conçu comme cylindre de travail différentiel,
où le premier élément de fermeture (3) est conçu comme un élément de fermeture de guidage et le deuxième élément de fermeture (4) est conçu comme un élément de fermeture de fond,
où la première extrémité de tube cylindrique (6) est une extrémité de tube cylindrique côté guidage et la deuxième extrémité de tube cylindrique (7) est une extrémité de tube cylindrique côté fond,
où l'unité de piston (5) présente un piston (5a) et une tige de piston (5b),
où le piston (5a) est disposé dans l'espace intérieur (8) du cylindre et sépare l'espace intérieur (8) du cylindre en un premier espace de travail (8a), réalisé sous la forme d'un espace de travail de tige de piston, et un deuxième espace de travail (8b), réalisé sous la forme d'un espace de travail de fond de piston, et où la tige de piston (5b) traverse de manière coulissante l'élément de fermeture de guidage (3).

3. Cylindre de travail (1) selon la revendication 1
est **caractérisé en ce**
**que** le cylindre de travail (1) est à double effet et conçu comme cylindre synchronisé,
où le premier élément de fermeture (3) est conçu comme un élément de fermeture de guidage et le deuxième élément de fermeture (4) est conçu comme un autre élément de fermeture de guidage,
où l'unité de piston (5) présente un piston (5a) et une tige de piston (5b),
où le piston (5a) est disposé dans l'espace intérieur (8) du cylindre et sépare l'espace intérieur (8) du cylindre en un premier espace de travail (8a), réalisé sous la forme d'un premier espace de travail de tige de piston, et un deuxième espace de travail (8b), réalisé sous la forme d'un deuxième espace de travail de tige de piston, et où la tige de piston (5b) traverse de manière coulissante l'élément de fermeture de guidage et l'autre élément de fermeture de guidage.

4. Cylindre de travail (1) selon la revendication 1
est **caractérisé en ce**
**que** le cylindre de travail (1) est à simple effet et conçu comme cylindre plongeur,
où le premier élément de fermeture (3) est conçu comme un élément de fermeture de guidage et le deuxième élément de fermeture (4) est conçu comme un élément de fermeture de fond,
où la première extrémité de tube cylindrique (6) est une extrémité de tube cylindrique côté guidage et la deuxième extrémité de tube cylindrique (7) est une extrémité de tube cylindrique côté fond,
où l'unité de piston (5) est formée par un piston plongeur,
où le piston plongeur est disposé dans l'espace intérieur (8) du cylindre et forme un espace de travail dans l'espace intérieur (8) du cylindre, et où le piston plongeur traverse de manière coulissante l'élément de fermeture de guidage (3).

5. Cylindre de travail (1) suivant une des revendications précédentes
est **caractérisé en ce**
**que** les soudures annulaires au laser présentent chacun une profondeur de la soudure annulaire (11),
où la profondeur de la soudure annulaire (11) présente un rapport de 1,1 à 2,5 par rapport à une épaisseur de paroi de tube cylindrique (12).
